Europäisches Patentamt

European Patent Office

Office européen des brevets

(19)

(11) **EP 1 070 947 B1**

(12) **EUROPÄISCHE PATENTSCHRIFT**

(45) Veröffentlichungstag und Bekanntmachung des Hinweises auf die Patenterteilung:
**08.10.2003  Patentblatt 2003/41**

(51) Int Cl.⁷: **G01L 9/14**, H01H 35/24, G01D 3/02

(21) Anmeldenummer: **00114194.4**

(22) Anmeldetag: **14.07.2000**

(54) **Druckmesssystem mit einem Magneten und einem magnetfeldempfindlichen Sensor**

System for measuring pressure comprising a magnet and a magnetic field-sensitive sensor

Système pour mesurer la pression comportant un aimant et un capteur sensible au champ magnétique

(84) Benannte Vertragsstaaten:
**AT BE CH CY DE DK ES FI FR GB GR IE IT LI LU MC NL PT SE**

(30) Priorität: **19.07.1999  DE 19933134**

(43) Veröffentlichungstag der Anmeldung:
**24.01.2001   Patentblatt 2001/04**

(73) Patentinhaber: **CLAAS Industrietechnik GmbH 33106 Paderborn (DE)**

(72) Erfinder:
• **Kleine, Herbert**
  **46286 Dorsten (DE)**
• **Berkemann, Stephan**
  **33100 Paderborn (DE)**

(56) Entgegenhaltungen:
**EP-A- 0 472 201        US-A- 4 581 941
US-A- 4 789 308        US-A- 5 608 317**

EP 1 070 947 B1

## Beschreibung

Die Erfindung bezieht sich auf eine Vorrichtung zur Messung des Druckes flüssiger oder gasförmiger Medien in hydraulisch oder pneumatisch betriebenen Anlagen oder Maschinen, mit mindestens einem ein Magnetfeld erkennenden Sensor und mindestens einem Magneten, wobei die räumliche Lage zwischen dem Sensor und dem Magneten ein Maß für den zu messenden Druck ist und mindestens ein Mittel vorhanden ist, welches die räumliche Lage zwischen dem Sensor und dem Magneten in Abhängigkeit von dem zu messenden Druck verändert. Derartige Druckmeßvorrichtungen werden zum Beispiel in hydraulisch oder pneumatisch betriebenen Anlagen und Maschinen zu Kontroll-, Steuer- und Regelzwecken eingesetzt.

Für diese Zwecke sind verschiedene Druckmeßvorrichtungen bekannt. In der Regel wird die Bewegungen einer Membran mittels Dehnungsmeßstreifen, induktiven oder kapazitiven Sensoren in ein elektrisches Signal umgewandelt. Als weitere Druckmeßsysteme sind Vorrichtungen bekannt, die aus einer Verformung von Quarzen oder keramischen Wertstoffen ein druckabhängiges elektrisches Signal ermitteln. Die bekannten Systeme besitzen eine gute bis sehr gute Meßwertauflösung und eignen sich besonders zur genauen Ermittlung eines anstehenden Druckes beziehungsweise einer Druckdifferenz in gasförmigen oder flüssigen Medien. Die Verwendung dieser bekannten Druckmeßvorrichtungen wird durch hohe Herstellkosten beziehungsweise durch zum Teil aufwendige Auswerteverfahren eingeschränkt. Vielfach werden die Druckmessungen aufgrund der hohen Kosten der bekannten Systeme auf die Abfrage nur eines bestimmten anstehenden Druckes, durch beispielsweise die Verwendung eines kostengünstigeren Druckschalter, beschränkt. Für die Ermittlung unterschiedlicher Drücke in einem System werden dann mehrere Druckschalter mit unterschiedlichen Schaltpunkten eingesetzt. Die ermittelbaren Druckmesswerte werden mit zunehmender Anzahl, durch die entstehenden Kosten, auf die Verwendung von nur weniger Druckschalter begrenzt.

Aus der EP 0472 201 ist eine Drucksensor bekannt, der mit einem Hallsensor ausgestattet ist, welcher die Auslenkung einer Membran druckabhängig und berührungslos erfaßt. Der gesamte Drucksensor wird durch ein zylindrisches Gehäuse gebildet, welches einerends mittels einer Schraubverbindung und andererends mit einer elektrischen Steckverbindung ausgestattet ist. Dieser Drucksensors stellt, wie auch allgemein alle weiteren bekannten Drucksensoren, ein abgeschlossenes Druckmeßsystem dar und wird beispielsweise an ein Ventilblock, ein Hubzylinder oder allgemein in ein hydraulisches oder pneumatisches System nach belieben eingefügt. Nachteilig wirkt sich die konstruktive Ausgestaltung der bekannten Drucksensoren aus, da sie in der jeweiligen Anwendungsform einen gewissen Bauraum benötigen und dadurch das jeweilige Bauteil vergrößern, indem an der Gehäuseoberfläche eine Anschluß und zusätzlicher Bauraum für den Sensor bereitgestellt werden muß. Vielfach muß auch eine Verbindungsleitung zur Anbringung beziehungsweise Einbringung in das System unterbrochen und der Anschluß für den Drucksensor mittels eines T-Verbindungsgliedes abgezweigt werden. Der Drucksensor steht dann rechtwinklig zu der Verbindungsleitung ab und behindert oftmals die Leitungsführung und wird dadurch leicht einer Beschädigung ausgesetzt.

Aus der US-A-4 789 308 ist ein Drucksensor bekannt, der mit einem Hallsensor ausgestattet ist um den Druck innerhalb eines Ölpumpensystems zu messen. Der Sensor ist hierbei im Medium selbst angeordnet und von einem geschlossenen Gehäuse umgeben.

Die US-A-4 581 941 offenbart einen elektronischen Druckimpulsgeber und einen Druckschalter. Zum Zweck der öldruckmessung ist ein Hallsensor in einem separaten Gehäuse angeordnet.

Aufgabe der Erfindung ist es die genannten Mängel der bekannten Drucksysteme für flüssige oder gasförmige Medien zu beheben.

Diese Aufgabe wird erfindungsgemäß durch ein kostengünstiges und einfach aufgebautes Druckmeßsystem gelöst, welches direkt in einem vorhandenen Systembauteil einer hydraulisch oder pneumatisch betriebenen Anlagen oder Maschinen integriert ist. Diese erfindungsgemäße Anordnung hat den Vorteil, daß kein zusätzlicher Bauraum außerhalb eines Systembauteils, wie beispielsweise ein Ventilblock, Steuerungsblock oder Hubzylinder benötigt wird. Das Druckmeßsystem wird direkt an einer geeigneten Stelle in das Systembauteil mit eingearbeitet. Zur Integration muß lediglich eine Bohrung mit unterschiedlichen Durchmessern an einer geeigneter Stelle in das Ventilgehäuse gebohrt und dann der Sensor und der Magnet entsprechend eingebracht werden.

Auch eine Integration in beispielsweise einen hydraulischen Steuerungsblock läßt sich leicht realisieren. So wird beispielsweise das Druckmeßsystem schon während der Montage des gesamten Blockes aus einzelnen Komponenten mit eingebaut und lediglich die elektrischen Anschlußleitungen nach außerhalb des Steuerungsblockes herausgeführt. Dafür wird nur eine geringe Gehäuseoberfläche benötigt. Desweiteren werden durch die erfindungsgemäße Integration Beschädigungen des Meßsystems durch mechanische, äußere Einflüße ausgeschlossen. Die Vorrichtung läßt sich auch leicht in solche hydraulische oder pneumatische Systembauteile einfügen, die an bestimmten Stellen fertigungstechnisch aus unnötigem Vollmaterial bestehen. Konstruktiv wird diese Material nicht benötigt, eine Bearbeitung an diesen Stellen würde aber unnötige Kosten verursachen und nur eine Gewichtsreduzierung des entsprechenden Systembauteils erbringen. So läßt sich das erfindungsgemäße Druckmeßsystem beispielsweise leicht in einen Hubzylinderboden integrieren. Der Zylinderboden wird vielfach für die Anbringung des Mediumanschlußes und für die Lagerung des Zylinders an der Anlage dicker als konstruktiv erforderlich ausgelegt, hierdurch kann das Druckmeßsystem dort erfindungsgemäße leicht eingebracht werden.

Der kostengünstige Aufbau des Druckmeßsystems ermöglicht die einfache Integration in ein Systembauteil. Dies wird im besonderen durch das berührungslose Meßprinzip dadurch erreicht, daß zumindest der Sensor außerhalb des zu messenden Mediums angebracht werden kann und somit nicht für die Verwendung bei einem bestimmten Druck oder für ein Verwendung in einem bestimmtes Medium ausgelegt werden muß. Der Sensor ist im Handel als Magnetfeldsensor in vielfälligen Variationen verfügbar. Alle weiteren Elemente sind bekannte, einfach herstellbare Drehteile und Mittel.

Die Anbringungsart und die Ausrichtung von Sensor zu Magnet ist prinzipiell so vorgesehen, daß sich bei einer Druckänderung im Medium die räumliche Lage zwischen dem Sensor und dem Magneten so ändert, das sich das durch den Sensor dringende Magnetfeld ändert. Ausgewertet wird eine relative Lageänderung, dabei kann die Lageänderung durch eine Rotation, durch eine Translation oder eine überlagerte Bewegung von Bewegungsarten in Abhängigkeit des zu messenden Druckes erzeugt werden. Jede Lageänderung wird von dem Sensor erkannt, wobei es besondere Ausgestaltungen von Führungselementen gibt, bei denen bestimmte Lageänderungen des Mittels keinen Einfluß auf die Meßwerte hat. Beispielsweise bei einer axialen Ausrichtung von Sensor und eines symmetrisch aufgebauten Magneten, wobei eine Rotation um die gemeinsame Achse keine Meßwertänderung hervorruft.

Die Vorrichtung ist sehr Robust in der Art der Auswertung der Lageänderung zwischen dem Sensor und dem Magneten. Es muß bei der Auswahl der Mittel lediglich sichergestellt werden, daß die Lageänderung aufgrund einer Druckänderung im Medium entstanden ist und weitere Bewegungen der Mittel keinen Einfluß auf die Meßwerte haben.

In einer ersten Ausgestaltung des Druckmeßsystems, wird das Mittel zur Veränderung der räumlichen Lage zwischen dem Sensor und dem Magneten von einem in einer Bohrung verschiebbar gelagerten Kolben gebildet, welcher umfangsseitig zumindest eine Dichtung aufweist, durch die zwei von dem Kolben getrennte Kammern in der Bohrung gegeneinander abgedichtet sind. Der Magnet an der nicht mit dem Medium in Berührung stehenden Kolbenseite ist fest mit dem Kolben verbunden. Der Kolben wird in einer Bohrung eingebracht, welcher auf der einen Seite der Bohrung mit dem zu messenden Medium in Verbindung steht. Die noch offene, gegenüberliegende Seite der Bohrung wird durch den Sensor selbst oder durch eine Element, wie beispielsweise eine Scheibe, mit einem Sensorhalteelement verschlossen. Der sich bildende Raum zwischen Kolben und Sensor wird hermetisch abgedichtet, dazu besitzt der Kolben und die Scheibe auf dem Umfang je eine Dichtung. Bewegt sich nun der Kolben bei einer Druckerhöhung im Medium aus seiner Ruhelage in Richtung des Sensors, so erhöht sich auch der Druck im Raum zwischen dem Kolben und dem Sensor. Dieser bewirkt dann bei einer Druckverminderung im Medium, die Rückstellungen des Kolbens in eine dem Druck im Medium entsprechende angepaßte, entferntere Stellung des Kolbens.

Die Anordnung von Sensor zu Magnet läßt sich entsprechend der obigen Ausführungsform auch umgekehrt ausführen. Die Bewegungen des Kolbens sind sehr gering, so daß der Sensor mit den notwendigen elektrischen Anschlüssen auch durch die Zylinderwandung oder die den Zylinder verschließende Scheibe geführt werden kann. Eine Lageänderungen des Sensors im Kolben gegenüber dem Zylinder kann durch eine Leitungsschleife ausgeglichen werden. An dem Wirkprinzip ändert sich dadurch nichts.

In einer weiteren Ausführung des Druckmeßsystems, wird das Mittel zur Veränderung der räumlichen Lage zwischen Magneten und Sensor durch eine Membrane gebildet. Die Membrane steht einerseits mit dem zu messenden Medium in Verbindung und andererseits in einer ersten Ausführungsform mit dem Magneten. Vorteilhaft bei dieser Ausführungsform ist, daß die Membran das Meßsystem von dem Medium trennt und außerdem die notwendigen Rückstellkräfte zu Verfügung stellt. Der Magnet ist in einer Ausführungsform an der von dem Medium abgewanden Seite der Membrane fest mit der Membrane, durch bekannte Techniken, wie beispielsweise verkleben oder verschrauben, angebracht und bewegt sich so bei einer Druckerhöhung im Medium auf den Sensor zu. Der Sensor kann auch hier in einer Scheibe gegenüber dem Magneten angebracht sein. Eine Abdichtung der Scheibe gegenüber der Bohrung ist hier nicht erforderlich. Die Membrane läßt sich leicht auf bekannte Weise mittel einer Quetschenverbindung, Klebung oder Schweißung in der Bohrung fixieren. An der dem Medium zugewandten Seite kann der Durchmesser auch entsprechend verjüngt sein, so daß sich eine Auflageschulter in der Bohrung für die Anlage der Membrane bildet. Hier kann dann auch eine Dichtung zur Abdichtung eingebracht werden. Eine Umkehrung der Anordnung von Sensor zu Magnet ist auch in diesem Ausführungsbeispiel denkbar.

In einer weiteren erfindungsgemäßen Ausgestaltung der Vorrichtung wird dem Mittel zur Veränderung der räumlichen Lage zwischen Sensor und Magnet mindestens ein Rückstellmittel zugeordnet. Dadurch wird erreicht, daß das Druckmeßsystem an verschiedene Druckmeßbereiche angepaßt werden kann. Desweiteren wird durch das Rückstellmittel das Mittel zur Veränderung der räumlichen Lage zwischen Sensor und Magnet im drucklosen Zustand in seine Ausgangslage zurückbewegt. Das Rückstellmittel kann beispielsweise, wie zuvor beschrieben pneumatisch, hydraulisch, hydropneumatisch oder auch mechanisch ausgeführt sein. Besonders geeignet sind mechanische Federn, die einzeln oder in Kombination verwendet werden können. Diese können als Zugfedern auf der Druckseite des Druckmeßsystems oder als Druckfeder vorteilhaft zwischen dem Sensor und dem Magneten angeordnet werden.

Das Druckmeßsystem kann auch als Differenzdruckmeßsystem ausgebildet sein. Hierzu wird das Mittel zur Veränderung der räumlichen Lage zwischen Sensor und Magnet beidseitig mit dem jeweilig zu messenden Medium beaufschlagt. Zur Fixierung des Kolbens im drucklosem Zustand, wird die notwendige Mittellage des Kolben durch beidseitig angeordnete, gleich starke Federn erreicht.

Damit das Meßprinzip besonders wirkungsvoll ausgenutzt werden kann, ist in einer weiteren Ausgestaltung der Erfindung der Sensor und der Magnet in seiner Bewegungsrichtung axial zueinander ausgerichtet. Hierdurch wird erreicht, daß bei einem symmetrischen Aufbau von Magnet und Sensor, Drehbewegungen des Sensors oder des Magnetes keinen Lageänderung zwischen Sensor und Magnet bewirken. Ein weiterer Vorteil entsteht bei dieser Anordnung durch eine vereinfachte Montage der Elemente. Hierbei kann auf eine exakte Lagejustierung der Elemente zueinander verzichte werden.

Eine weitere Verbesserung des Druckmeßsystem ergibt sich durch die Verwendung von unmagnetisierbaren Materialien im System. Bekanntlich werden Eisenwerkstoffe, wenn sie sich eine bestimmte Zeit in einem Magnetfeld befinden, aufmagnetisiert. Hierdurch werden dann die Änderungen der magnetischen Flußdichte, welche bei einer Druckänderung beziehungsweise räumlichen Lageänderung entstehen, verringert, so daß das Meßsystem dann mit veränderter Auflösung und verändertem Meßbereich arbeitet. Durch den Einsatz von unmagnetischen Werkstoffen in unmittelbarer Nähe des Sensor beziehungsweise des Magneten kann dieser Effekt vermindert werden. Dabei kann die Scheibe, welche den Sensor in der Bohrung fixiert, beziehungsweise das Mittel zur Veränderung der räumlichen Lage zwischen Sensor und Magnet teilweise oder komplett aus einem solchen unmagnetisierbaren Material wie beispielsweise Messing bestehen.

Der besonders einfacher Aufbau des Druckmeßsystem ermöglicht die einfache Integration der einzelnen Elemente der Vorrichtung in einem Systembauteil. Es ist lediglich erforderlich zumindest eine Bohrung an der gewünschten Stelle in das Bauteil einzubringen. Besonders vorteilhaft ist die erfindungsgemäße Einbringung des Druckmeßsystems in eine Bohrung die stirnseitig zur Aufnahme der Scheibe einen größeren Innendurchmesser aufweist als in dem Bereich wo der Kolben verschiebbar ist und der Innendurchmesser der Verbindung zu dem Medium aus einem von dem Kolbendurchmesser geringeren Durchmesser besteht, wodurch in der Bohrung eine Auflageschulter für die Scheibe und eine weitere Auflageschulter als Anschlag für den Kolben gebildet wird. Diese Bohrung ist leicht zusätzlich in einen Steuerungsblock oder ein Ventil einbringbar und kann bei der Herstellung beziehungsweise bei der mechanischen Bearbeitung des entsprechenden Bauteils oder Gehäuses mit eingearbeitet werden.

Die Bohrung besteht aus drei koaxial hintereinander angeordneten Bereiche mit unterschiedlichen Innendurchmessern, wobei der mit dem Medium in Verbindung stehende Bereich den geringsten Durchmesser besitzt. Der nachfolgende Bereich ist für die Anordnung der Membrane oder des Kolbens vorgesehen und besitzt gegenüber der Verbindungsbohrung einen erweiterten Durchmesser. An der Übergangsstelle entsteht durch die unterschiedlichen Durchmesser eine Auflageschulter. Diese dient dann als Anschlag für den Kolben im drucklosen Zustand. Der nachfolgende Bereich besitzt erneut einen erweiterten Durchmesser und ist zur Halterung des Sensors beispielsweise mittels einer Scheibe gedacht. Diese Scheibe wird bis zur der weiteren Auflageschulter eingebracht und kann anhand einer eingearbeiteten Nut mittels eines sogenannten Seegerings dort fixiert werden.

Erfindungsgemäß besitzt der Sensors eine integrierte Auswerteelektronik mit einem programmierbaren Datenspeicher, in welchem beispielsweise eine Korrekturtabelle abgespeicherte werden kann, die zur Anpassung der Sensormeßwerte an die zugehörigen Druckwerte dient.

Somit können die Ausgangssignale des Sensors vorgewählt und Korrekturwerte, Anpassungen an gewünschte Ausgangskennlinien oder Schaltpunkte abgelegt oder eingestellt werden. Die ermittelten Sensorwerte könnte dadurch beispielsweise durch eine programmierbare Kennlinie der gewünschten Ausgangsspannung des Sensors zugeordnet werden.

Der einfache kostengünstige Aufbau des Drucksystems stellt keine hohen Ansprüche an die Fertigungs- und Bauteiltoleranzen. Für eine ausreichend gute Ermittlung des tatsächlichen Druckes im zu messenden Medium wird eine Kalibrierung oder Eichung des Sensor durch eine Vergleichsmessung im eingebauten Zustand der Vorrichtung, mittels eines parallelgeschalteten, hochauflösenden Druckmeßsystems durchgeführt. Dazu werden die Meßergebnisse des hochauflösenden Vergleichsmeßsystems den Meßwerten des erfindungsgemäß arbeitenden Meßsystems zugeordnet. Dies kann bereichsweise derart geschehen, indem der Druck im System in festgelegten Bereichen variiert wird, für jeden Bereich ein Korrekturwert ermittelt und im Datenspeicher abgespeichert wird. Eine weitere Zuordnung kann mittels einer einmalig, programmierten Tabelle erfolgen. Zwischenmeßwerte, die bei einer späteren Druckmessung auftreten und nicht aufgeführt sind, können mittels einer Mittelung von benachbarten Tabellenwerten durch eine Interpolation ermittelt werden. Aus den ermittelten einzelnen Meß- und zugehörigen Druckwerten kann auch durch eine mathematische Regressionsberechnung eine Kennlinie beziehungsweise eine näherungsweise vorhandene mathematische Beziehung zwischen den Meßwerten und den tatsächlichen Druckwerten ermittelt und als solche abgespeichert werden.

Durch den kostengünstigen und einfachen Aufbau des Druckmeßsystems ist die Vorrichtung erfindungsgemäß auch als Druckschalter mit mindestens einem Schaltpunkt verwendbar. Dabei ist bei einer Verwendung als Druckschalter die punktuelle Zuordnung eines Meßwertes an einen Schaltpunkt vorteilhaft. Die Ausgestaltung der Vorrichtung mit einem Datenspeicher ermöglicht es, den Schaltpunkt anhand einer Vergleichsmessung einzustellen. Dafür wird der Druck im System anhand eines Vergleichsystems auf den Druck eingestellt, bei welchem das Druckmeßsystem ein Schaltsignal abgeben soll. Für diesen Druckwert oder für mehrere Druckwerte wird dann jeweils der Meßwert dem Schaltpunkt beziehungsweise dem Druckwert zugeordnet und dann in dem Datenspeicher des Drucksensors abgespeichert. Das vom Druckmeßsystem abgegebene Schaltsignal kann ein Spannungssprung von dem Sensormassepotential zur Betriebsspannung oder aber auch nur eine Sprung zu einem definierten Potential sein. Sollen mehrere Schaltpunkte realisiert werden, ist es vorteilhaft die Spannungssprünge so einzuteilen, daß dem höheren Druckschaltpunkt auch das höhere Spannungspotential zugeordnet wird. Beispielsweise wird das Druckmeßsystems als Druckschalter mit zwei gewünschten Schaltpunkten in einem Arbeitsbereich von 0-200 bar und einem Ausgangsspannungsbereich von 0-10V so ausgelegt, daß die Ausgangsspannung beim Erreichen des ersten Schaltpunktes bei 70 bar von 0V auf 3,5V und beim Erreichen eines weiteren Schaltpunktes bei 180 bar von 3,5V auf 9V springt. Die Auswerteschaltung des Drucksensors kann ferner mit einem bekannten Bussystem verbunden sein oder die ermittelten Druckwerte digitalisiert zur Verfügung stellen. Die Programmierung des Sensors kann auch über die vorhanden Sensoranschlüsse oder über eine spezielle Schnittstelle durch ein externes Programmiergerät oder auch durch vorhandene Kalibriereinrichtungen am Drucksensor, wie beispielsweise Taster, durchgeführt werden.

Die Erfindung beschränkt sich nicht auf die beschriebenen Drucksensoren, sondern läßt sich auch auf Sensoren ausweiten, welche in Abhängigkeit des zu messenden Druckes rotieren oder eine Kombination aus Rotation und Translation ausführen. Für einen Fachmann liegt es in Verbindung mit der beschriebenen Erfindung besonders nahe, auch weitere Kolbenausführung zu wählen, bei denen der Kolben eine schraubenförmige Längsnut und die Bohrung eine entsprechende Führung aufweist. Bei einer Druckerhöhung vollführt der Kolben dann neben seiner Abstandsänderung auch eine Rotation. Auch alle weiteren Drucksensoren lassen sich je nach Ausgestaltung des Systems erfindungsgemäß in einem Systembauteil integrieren.

Anhand der beigefügten Zeichnungen soll die Erfindung nachfolgend näher erläutert werden. Es zeigt:

Figur 1 einen Schnitt durch eine Druckmeßvorrichtung,

Figur 2 einen Schnitt wie in Figur 1, wobei der Kolben mit dem Magneten jedoch in einer verschobenen Stellung zu sehen ist,

Figur 3 eine in ein Bauteil integriert Druckmeßvorrichtung,

Figur 4 einen Hubzylinder mit der erfindungsgemäßen Einbringung des Druckmeßsystems,

Figur 5 einen Schnitt durch eine Differenzdruckmeßvorrichtung und

Figur 6 ein Diagramm, welches die Hall-Spannung $U_H$ und die Ausgangsspannung U des Sensors in Abhängigkeit des Weges s des Kolbens aufzeigt.

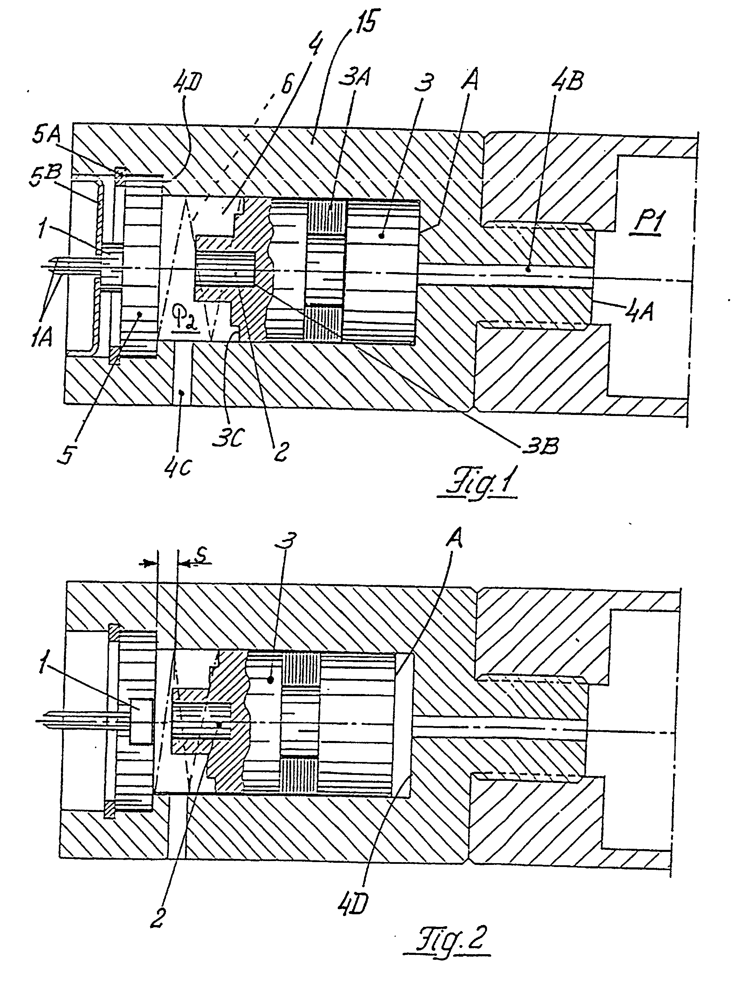

In Figur 1 ist ein Schnitt durch eine Ausführungsform eines Druckmeßsystems gezeigt. Dabei wird das Mittel 3 zur Veränderung des Abstandes zwischen dem Sensor 1 und dem Magneten 2 von einem in einem verschiebbar gelagerten Kolben 3 gebildet, an dem der Magnet 2 angeordnet ist. Der Kolben 3 befindet sich in der Bohrung 4 und steht durch die Öffnung 4B in dem Gehäuse 15 mit dem zu messenden Medium in Verbindung. Der Magnet 2 wird mittels des Kolben 3 unter dem Druck P1 des Mediums in Richtung auf den in der Vorrichtung ortsfest montierten Sensor 1 verschoben. Zur Aufnahme des Magneten 2 ist im Kolben 3 eine entsprechende Aussparung 3B vorgesehen. Die Aussparung 3B ist so angeordnet, daß der Magnet 2 und der Sensor 1 axial zueinander auf der Zylinderachse ausgerichtet sind. In einer Ausführungsform ist der Magnet 2 herausnehmbar in der Aussparung 3B befestigt (z.B. über eine seitliche Klemmschraube, nicht dargestellt). Die Aussparung kann auch so dimensioniert sein, daß der Magnet 2 unter Klemmwirkung in der Aussparung 3B gehalten ist. Alternativ dazu kann der Magnet 2 in der Aussparung 3B auch eingeklebt sein. In einer nicht dargestellten Ausführungsform wird für den Kolben 3 ein magnetisches Material verwendet, so daß der Kolben 3 selbst gleichzeitig als Magnet fungiert. Der Kolben 3 weist eine Dichtung 3A auf - vorzugsweise einen in einer umlaufenden Nut des Kolbens befestigten O-Ring. Durch diese Dichtung 3A sind zwei von dem Kolben 3 getrennte Druckkammern in der Bohrung 4 gegeneinander abgedichtet.

Das Gehäuse 15 weist an einer Stirnseite einen Gewindestutzen 4A mit einer durchgehenden Bohrung 4B auf, wobei die Bohrung 4B die Öffnung in dem Gehäuse 15 bildet, über die der Kolben 3 von einer Seite mit dem Medium in Berührung steht. Über diesen Gewindestutzen 4A wird die Vorrichtung zum Beispiel an eine Hydraulikleitung angeschlossen. Die Bohrung 4B im Gewindestutzen ist der Zugang zu der ersten Druckkammer der Bohrung 4. Auf der anderen Seite des Kolbens 3 befindet sich die andere Druckkammer des Kolbens 3. Nicht dargestellt ist die einfachste Ausführungsform, bei der die durch die Auslenkung des Kolbens 3 entstehende Druckerhöhung in diesem Raum eine Rückstellung des Kolbens 3 in die Endlage bewirkt. Die Scheibe 5 ist dann gegenüber der Bohrung 4 abgedichtet und besitzt keine Entlüftungsöffnung 4C. Bei der Verwendung eines Rückstellmittels in diesem Raum, befindet sich in dem Mantel der Bohrung 4 oder in der Scheibe 5 zumindest eine Entlüftungsöffnung 4C, damit das beim n Verfahren des Kolbens 3 verdrängte Medium (Luft) dort entweichen kann.

Bei der Ausführungsform gemäß Figur 1 ist der Sensor 1 ortsfest auf einer stirnseitig der Bohrung 4 angeordneten Scheibe 5 befestigt. Aus Wartungs- und Reparaturgründen ist die Scheibe 5 vorzugsweise entnehmbar in der Bohrung 4 montiert.

Zur Aufnahme der Scheibe 5 weist die Bohrung 4 stimseitig einen größeren Innendurchmesser auf als in dem Bereich, wo der Kolben 3 verschiebbar ist, wodurch in der Bohrung 4 eine eingefaßte Auflageschulter 4D für die Scheibe 5 gebildet wird. Dabei wird die Scheibe 5 beispielsweise über einen Seegering 5A, der in einer in der Innenwandung der Bohrung 4 angeordneten Nut befestigt wird, gehalten.

Der Magnetfeldsensor 1 ist in der dargestellten Ausführungsform über einen in der Bohrung 4 eingebrachten Ring 5B unter Klemmwirkung auf der Scheibe 5 angeordnet; und zwar auf der Seite der Scheibe 5, die dem Kolben 3 mit dem Magneten 3 abgewandt ist. Die elektrischen Anschlußleitungen 1A des Sensors 1 ragen aus der Bohrung 4 heraus. Der Klemmring 5B hat den Vorteil, daß der Sensor 1 jederzeit lösbar auf der Scheibe 5 montiert ist. Auf diese Weise kann die Vorrichtung in einfacher Weise mit einem anderen Sensortyp oder -art (z.B. für verschiedene Meßbereiche) konfektioniert werden. Statt eines Klemmringes, kommen selbstverständlich noch andere Mittel in Betracht, um den Sensor 1 lösbar auf der Scheibe 5 zu montieren (z.B. Verschraubungen). In einer nicht dargestellten Ausführungsform wird der Sensor 1 auf die Scheibe 5 aufgeklebt. Der Sensor 1 kann auch in eine Vertiefung oder Aussparung in der Scheibe 5 eingelassen sein. Ebenso kann er auf der anderen Seite der Scheibe angeordnet sein, wobei dann seine elektrischen Anschlußleitungen durch die Scheibe oder den Zylinder hindurch geführt werden müssen.

Damit das vom Magneten 2 erzeugte Magnetfeld den Sensor 1 zur Erzeugung des Meßsignals möglichst unabgeschwächt durchdringen kann, besteht insbesondere die Scheibe 5, auf der der Sensor 1 montiert ist, aus unmagnetischem beziehungsweise unmagnetisierbarem Material, zum Beispiel aus Messing. Vorzugsweise ist auch der Kolben 3 aus diesem Material hergestellt.

Wie in Figur 1 dargestellt, ist eine Feder 6 als Rückstellmittel vorgesehen, die der durch den Druck bewirkten Abstandsänderung zwischen dem Sensor 1 und dem Magneten 2 entgegenwirkt. Auf den Kolben 3 übt also einerseits der zu messende Druck P1 eine Kraft $F_p$ auf die Kolbenstirnfläche A und andererseits die Feder eine entgegengerichtete Kraft $F_F$ aus. Folgendes Kräftegleichgewicht stellt sich bei einem bestimmten Druck P1 ein:

$$- k*s = F_F = F_p = P1*A$$

wobei k die Federkonstande ist. Der Weg s ist direkt proportional dem Druck P1 unter der Annahme, daß die Fläche A und die Federkonstande k zumindest annähernd konstant sind. Die Feder 6 und die Kolbenstirnfläche sind in einem Ausführungsbeispiel so ausgelegt, daß die Feder 6 bei einer Verschiebung des Kolbens 3 um $\Delta s= 3mm$ eine Rückstellkraft erzeugt, die einen Druck im Medium von P1= 200 bar ausgleicht. Selbsverständlich ist die Vorrichung nicht auf diesen Druckbereich beschränkt. Die Feder 6 ist zwischen der Scheibe 5 und dem Kolben 3 angeordnet und der vorhandene Bauraum bestimmt den möglichen Arbeitsbereich. Zur Fixierung der Feder 6 weist der Kolben 3 vorzugsweise einen Fortsatz 3C auf. Dadurch wird die Feder 6 zumindest einerseits lagefixiert abgestützt und zum anderen wird verhindert, daß die Feder 6 bei der Verschiebung des Kolbens 3 an der Innenwandung des Zylinders 4 schleift oder schrammt und dadurch ein undefinierte Kraftkomponente in das System einbringen würde.

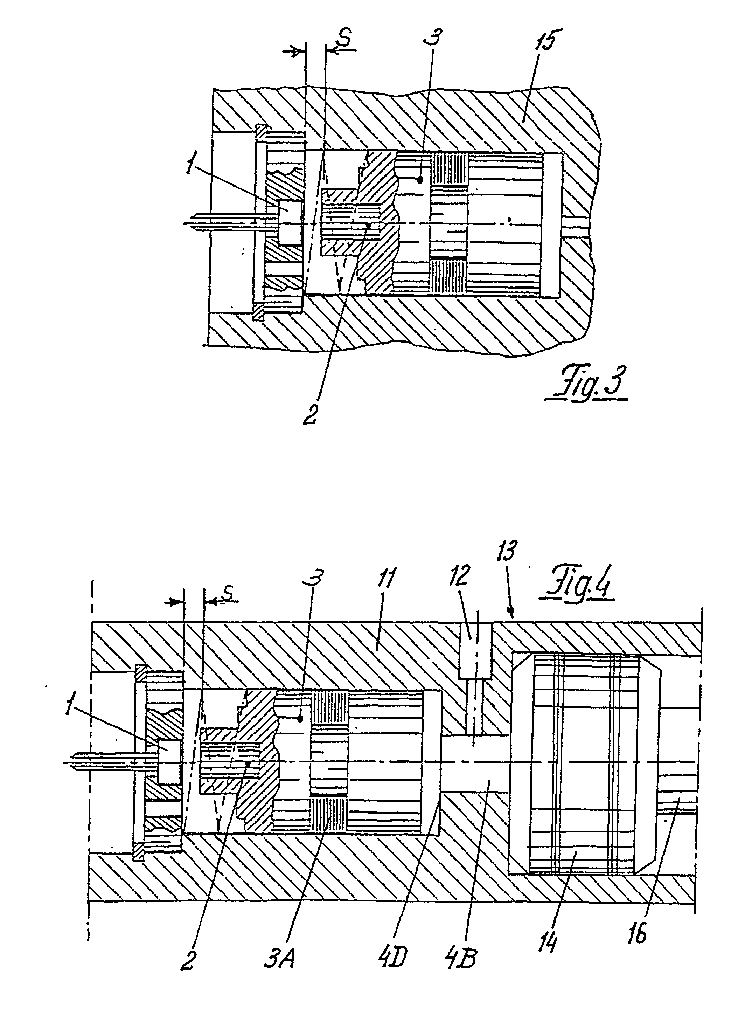

In Figur 2 wird die Druckmeßvorrichtung in einer weiteren Schnittdarstellung gezeigt. Gegenüber der Figur 1 ist hier die räumliche Lage von Magnet 2 zu Sensor 1, durch eine ausgelenkte, verschobene Stellung des Kolbens 3 und eine weitere Anbringungsart des Sensors 1 in der Scheibe 5, verändert dargestellt. Diese Anbringungsart des Sensors 1 ergibt die bestmöglichste Erkennung des Abstandes (s) zwischen dem Sensor 1 und Magneten 2. Das aus der Stirnfläche des Magneten 2 austretende Magnetfeld durchdringt hierbei auf kürzestem Wege den Sensor 1 mit größtmöglichster magnetischen Flußdichte B. Der Magnet 2 kann somit in dieser Ausführungsform gegenüber anderen Ausführungsformen kostengünstiger mit einem schwächeren Magnetfeld ausgestattet ausgelegt werden.

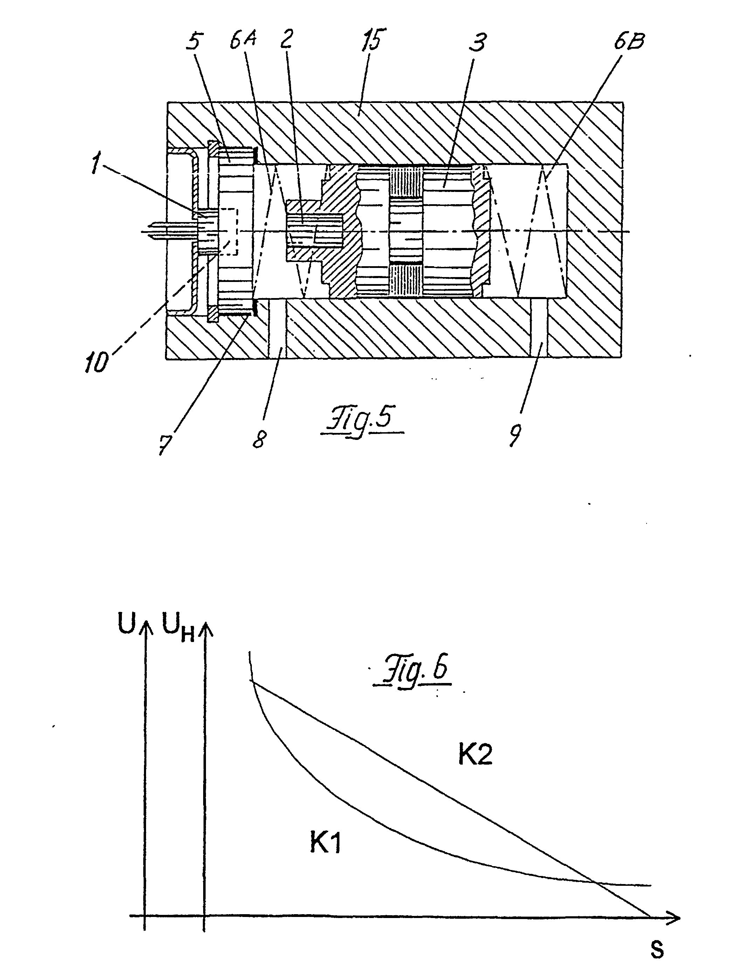

In Figur 3 wird das Druckmeßsystem auf erfindungsgemäßer Weise in einem Gehäuse 15 eines Systembauteils einer hydraulischen Anlage dargestellt. Der Aufbau des Druckmeßsystems ist mit den Darstellungen in Figur 1 und 2 identisch. Das Bauteil hat dazu an der entsprechenden Stelle eine Bohrung mit drei unterschiedlichen Durchmessern. Die Bohrung mit dem geringsten Durchmesser stellt die Verbindung zu dem zu messenden Druckmedium her. Der Kolben 3 mit der Dichtung und dem Magneten 2 wird in der dem Bohrungsbereich mit dem mittleren Durchmesser geführt. Abschließend ist die Scheibe mit dem Sensor 1 in die Bohrung an der Stelle mit dem größten Durchmesser angebracht und dort entsprechend mit dem Gehäuse 15 fixiert.

Figur 4 zeigt auszugsweise die erfindungsgemäße Anordnung eines einfachen Druckmeßsystems in dem Boden 11 eines Hubzylinders 13. Über die Öffung 12 wird der Hubzylinder 13 mit Hydraulikflüssigkeit oder Pressluft beaufschlagt. Der Hubkolben 14 und die Kolbenstange 16 werden dann entsprechend der eingebrachten Menge verschoben. Der in dem Medium herrschende Druck beaufschlagt über die Bohrung 4B auch den Kolben 3 und verursacht eine dem Druck entsprechende Verschiebung des Magneten 2 auf den Sensor 1 zu. Der Sensor 1 und der Magnet 2 werden beide durch eine Dichtung 3A von dem Medium getrennt. Die dargestellten relativen Stellungen von Kolben 3 und Hubkolben 14 zeigen an, daß über den Öfnung 12 schon eine bestimmte Menge Hydraulikflüssigkeit in den Hydraulikzylinder 13 gefördert worden ist und ein bestimmter Druck schon eine Kolbenbewegung des Kolbens 3 aus der Endlage verursacht hat. Dies ist erkennbar daran, daß der Kolben 3 nicht mehr an der Auflageschulter 4D anliegt. Normalerweise hat der Hubzylinder 13 die Aufgabe in einer Anlage oder Maschine eine lineare Bewegung eines Elementes femgesteuert auszuführen. Diese Bewegung tritt aber erst dann ein, wenn der Hubzylinder mit einer bestimmten Kraft auf das Element einwirkt. Das heißt die von dem Druck in der Hydraulikflüssigkeit abhängige Kraft auf den Hubkolben muß eine bestimmten Wert übersteigen. Dieser ist in dem gezeichneten Fall noch nicht erreicht. Das Druckmeßsystem erkennt aber dennoch den schon herrschenden Druck in dem Hydrauliksystem und kann schon zur Ansteuerung des Hubzylinders 13 ausgewertet werden. Damit es aber nicht zu Schwingungen in dem Hydrauliksystem beispielsweise durch Wechselwirkungen zwischen den Rückstellkräften des Druckmeßsystems und der auf die Kolbenstange 16 fremdeinwirkenden Kräfte kommt, kann der Durchmesser der Bohrung 4B entsprechend einer Blende ausgelegt werden.

In Figur 5 ist das Druckmeßsystem als ein Differenzdruckmeßsystem ausgeführt. An dem prinzipiellen Aufbau des Systems ändert sich gegenüber den in den vorherigen Figuren ausgeführten, einfachen Druckmeßvorrichtungen nichts. Lediglich die Scheibe 5 ist gegenüber der Bohrung 4 durch eine Dichtung 7 abgedichtet. Die beiden Druckkammern werden über die beiden Bohrungen 8, 9 mit dem jeweiligen zu vergleichendem Druckmedium verbunden. Der Sensor 1 befindet sich außerhalb der Druckkammer auf der dem Kolben 3 abgewandten Seite der Scheibe 5 oder auch an der Anbringungsposition 10 in der Scheibe 5 versenkt.

In einer nicht dargestellten, vereinfachten Ausführungsform wird bei dem beschriebenem Differenzdruckmeßsystem auf ein Rückstellmittel 6A, 6B verzichtet. Je nach dem in welcher Druckkammer der größere Druck P1, P2 herrscht, stellt sich der Kolben 3 mit dem Magneten 2 minimal oder maximal weit von dem Sensor 1 entfernt ein. Ein Vergleich zweier Drücke ist dahingehend möglich, indem man feststellen kann, ob der zu messende Druck P1 größer oder kleiner als der Druck P2 ist. Anhand der Geschwindigkeit der räumlichen Lageänderung zwischen den Anschlägen des Kolbens 3, kann man auch Rückschlüsse auf die Größe der Druckdifferenz ziehen. Eine Rückmeldung darüber, welcher Ventilausgang oder -zweig momentan mit Hydraulikflüssigkeit beaufschlagt wird, ist hiermit leicht und kostengünstig zu realisieren. Auch kann das Differenzdruckmeßsystem zwischen einen Zylinder und ein Schaltventil geschaltete werden. Dies ermöglicht dann eine Überwachung der Funktion des Schaltventils, die Erkennung der Endlagen des Zylinderkolbens und eine Erkennung der Belastung der Kolbenstange in unbetätigter Stellung des Ventils.

Eine Auflagedruckregelung läßt sich hierdurch auf einfachster Weise für mit dem Boden in berührungsstehenden Arbeitswerkzeugen an Landmaschinen realisieren. Indem zumindest von dem Meßsystem erkannt wird, welche Seite des Hubzylinders (Kolben- oder Ringfläche) mit dem höheren Druck beaufschlagt ist. Das Arbeitswerkzeug wird im Normalbetrieb von der Erntemaschine zumindest überwiegend oder auch vollständig getragen. Dabei herrscht auf der entsprechenden Seite des Kolbens ein erhöhter Druck. Wird das Arbeitswerkzeug aber von dem Boden durch eine Bodenerhöhung angehoben, fällt dieser Druck ab, dies wird von dem Druckmeßsystem erkannt und ein entsprechendes Steuersignal von der Auflagedruckregelung zur Anhebung des Arbeitswerkzeug generiert.

Erfindugsgemäß kann die Druckmeßvorrichtung direkt in das Schaltventil oder den Hubzylinder integrieren werden.

Die in den vorhergehenden Figuren dargestellten Ausführungsformen sind in besonderer Weise für die Serienfertigung geeignet, da sie sich in einfacher Weise montieren lassen. Zunächst wird der Magnet 2 in die Aussparung 3B des Kolbens 3 eingesetzt. Dann der Kolben 3 mit dem Magneten 2 in die Bohrung 4 eingeführt. Anschließend wird die Feder 6 eingesetzt und auf dem Haltekragen 3C des Kolbens 3 fixiert. Nun wird die Scheibe 5 auf die Auflageschulter 4D der Bohrung 4 gelegt und mittels eines Seegeringes 5A fixiert. Schließlich wird der Sensor 1 über den Klemmring 5B auf der Scheibe 5 befestigt.

Die Kalibrierung des Druckmeßsystems erfolgt zum Beispiel in der folgenden Weise. Zuerst wird das Druckmeßsystem an der dafür vorgesehenen Stelle in das Systembauteil eingebaut. Dann wird der zu überwachende Zweig des Systembauteils mit unterschiedlichen Drücken beaufschlagt und der jeweils herrschende Druck parallel mit einer kalibrierten oder geeichten Druckmeßvorrichtung gemessen. Die entsprechenden Meßwerte beider Druckmeßsysteme werden aufgezeichnet und anschließend ausgewertet. Auf diese Weise erhält man eine Kennlinie des erfindungsgemäßen Druckmeßvorrichtung in Abhängigkeit vom Druck im zu messenden Medium. Das Ergebnis kann dann in den Drucksensor oder in die Auswerteschaltung einprogrammiert werden.

Die Messung erfolgt vorzugsweise über den gesamten Verschiebebereich des Kolbens 3 und kann mehrfach wiederholt werden. Die Beaufschlagung des Kolbens 3 mit unterschiedlichen Drücken kann hierzu in diskreten Schritten oder kontinuierlich erfolgen.

In Figur 6 sind zwei Kennlinien K1 und K2 dargestellt, die die Abhängigkeit der Hall-Spannung $U_H$ beziehungsweise die Ausgangsspannung U des Sensors 1 von dem Abstand s zeigen. Der Verlauf der Kennlinie K1 hängt unteranderem von dem eingeprägten Steuerstrom durch die Hallsonde oder auch von der Umgebungstemperatur ab. Diese Größen und weitere Größen werden bei der Ermittlung der Ausgangskennlinie K2 berücksichtigt. Aus dem Verlauf von K1 ist der unlineare Zusammenhang zwischen der Hall-Spannung $U_H$ und dem Abstand s zu erkennen. In dem Kalibrierverfahren werden diese Einflüße mit ausgewertet und eine entsprechende Zuordnung von Sensorwert zu Ausgangswert beziehungsweise Druck in einer Datentabelle abgespeichert. Die Hall-Spannung $U_H$ wird beispielsweise digitalisiert und mittels der programmierten Kalibrierung, beispielsweise anhand der hinterlegten Tabelle in eine digitale oder analoge Ausgangsgröße K2 transformiert.

**Patentansprüche**

1. Vorrichtung zur Messung des Druckes flüssiger oder gasförmiger Medien in hydraulisch oder pneumatisch betriebenen Anlagen oder Maschinen, mit mindestens einem ein Magnetfeld erkennenden Sensor (1) und mindestens einem Magneten (2), wobei die räumliche Lage zwischen dem Sensor (1) und dem Magneten (2) ein Maß für den zu messenden Druck ist und mindestens ein Mittel vorhanden ist, welches die räumliche Lage zwischen dem Sensor (1) und dem Magneten (2) in Abhängigkeit von dem zu messenden Druck verändert,
**dadurch gekennzeichnet, dass**
die Vorrichtung innerhalb eines Gehäuses (11, 15) eines Systembauteils (1.3). einer hydraulisch oder pneumatisch betriebenen Anlage oder Maschine angeordnet und der Sensor (1) außerhalb des Mediums gelagert ist.

2. Vorrichtung nach Anspruch 1,
**dadurch gekennzeichnet, dass**
das Mittel zur Veränderung der räumlichen Lage zwischen dem Sensor (1) und dem Magneten (2) von einem in einer Bohrung (4) verschiebbar gelagerten Kolben (3) gebildet wird.

3. Vorrichtung nach einem oder mehreren der vorangegangenen Ansprüche,
**dadurch gekennzeichnet, dass**
der Kolben (3) umfangsseitig eine Dichtung (3A) aufweist, durch die zwei von dem Kolben (3) getrennte Kammern in der Bohrung (4) gegeneinander abgedichtet sind.

4. Vorrichtung nach Anspruch 1,
**dadurch gekennzeichnet,daß**
das Mittel zur Veränderung der räumlichen Lage zwischen dem Sensor (1) und dem Magneten (2) von einer einseitig mit dem Medium in Verbindung stehenden, reversibel verformbaren Membran gebildet wird.

5. Vorrichtung nach mindestens einem der vorhergehenden Ansprüche 1 bis 4,
**dadurch geken nzeichnet,daß**
sich zwischen dem Sensor (1) und dem Magneten (2) mindestens ein Rückstellmittel (6) befindet, das der durch den Druck bewirkten räumlichen Lageänderung entgegenwirkt.

6. Vorrichtung nach Anspruch 5,
**dadurch gekennzeichnet,daß**
das Rückstellmittel von mindestens einer Feder (6) gebildet wird, welche zwischen dem Sensor (1) und dem Kolben (3) angeordnet ist.

7. Vorrichtung nach einem oder mehreren der vorangegangenen Ansprüche,
**dadurch gekennzeichnet, dass**
die Vorrichtung eine Scheibe (5) und/oder einen Kolben (3) und/oder eine Membrane enthält, die aus unmagnetisierbaren Material besteht.

8. Vorrichtung nach mindestens einem der vorhergehenden Ansprüche 1 bis 7,
**dadurch gekennzeichnet,daß**
die Bohrung (4) stimseitig zur Aufnahme der Scheibe (5) einen größeren Innendurchmesser aufweist als in dem Bereich wo der Kolben (3) verschiebbar ist und der Innendurchmesser der Verbindung (4B) zu dem Medium durch eine von dem Kolbendurchmesser geringeren Durchmesser besteht, wodurch in der Bohrung (4) eine Auflageschulter (4D) für die Scheibe (5) und eine weitere Auflageschulter (4E) als Anschlag für den Kolben (3) gebildet wird.

9. Vorrichtung nach einem oder mehreren der vorangegangenen Ansprüche,
**dadurch gekennzeichnet, dass**
der Sensor (1) eine integrierte Auswertelektronik mit einem programmierbaren Datenspeicher besitzt die zur Anpassung der Sensormesswerte an die zugehörigen Druckwerte dient.

10. Verwendung der Vorrichtung nach einem oder mehreren der vorangegangenen Ansprüche,
**dadurch gekennzeichnet, dass**
die Vorrichtung als Druckschalter mit mindestens einem Schaltpunkt verwendet wird.

## Claims

1. Apparatus for measuring the pressure of liquid or gaseous media in hydraulically or pneumatically operated installations or machines, comprising at least one sensor (1) for detecting a magnetic field and at least one magnet (2), wherein the spatial position between the sensor (1) and the magnet (2) is a measurement in respect of the pressure to be measured and there is at least one means which varies the spatial position between the sensor (1) and the magnet (2) in dependence on the pressure to be measured, **characterised in that** the apparatus is arranged within a housing (11, 15) of a system component (13) of a hydraulically or pneumatically operated installation or machine and the sensor (2) is supported outside the medium.

2. Apparatus according to claim 1 **characterised in that** the means for varying the spatial position between the sensor (1) and the magnet (2) is formed by a piston (3) supported slidably in a bore (4).

3. Apparatus according to one or more of the preceding claims **characterised in that** the piston (3) has at its periphery a seal (3A) by which two chambers which are separated by the piston (3) in the bore (4) are sealed off relative to each other.

4. Apparatus according to claim 1 **characterised in that** the means for varying the spatial position between the sensor (1) and the magnet (2) is formed by a reversibly deformable diaphragm which is in communication on one side with the medium.

5. Apparatus according to at least one of preceding claims 1 to 4 **characterised in that** disposed between the sensor (1) and the magnet (2) is at least one return means (6) which acts in opposition to the change in spatial position caused by the pressure.

6. Apparatus according to claim 5 **characterised in that** the return means is formed by at least one spring (6) arranged between the sensor (1) and the piston (3).

7. Apparatus according to one or more of the preceding claims **characterised in that** the apparatus includes a disc (5) and/or a piston (3) and/or a diaphragm which comprises non-magnetisable material.

8. Apparatus according to at least one of preceding claims 1 to 7 **characterised in that** at its end to receive the disc (5) the bore (4) is of a larger inside diameter than in the region where the piston (3) is slidable and the inside diameter of the communication (4B) with the medium comprises a diameter which is smaller than the piston diameter, whereby formed in the bore (4) is a support shoulder (4D) for the disc (5) and a further support shoulder (4E) as an abutment for the piston (3).

9. Apparatus according to one or more of the preceding claims **characterised in that** the sensor (1) has an integrated electronic evaluation system with a programmable data memory which serves to adapt the sensor measurement values to the associated pressure values.

10. Use of the apparatus according to one or more of the preceding claims **characterised in that** the apparatus is used as a pressure switch with at least one switching point.

## Revendications

1. Dispositif pour la mesure de la pression de milieux liquides ou gazeux dans des installations ou machines à fonctionnement hydraulique ou pneumatique, comprenant au moins un senseur (1) détectant un champ magnétique et au moins un aimant (2), la position spatiale entre le senseur (1) et l'aimant (2) étant une indication de la pression à mesurer, et au moins un moyen étant prévu pour modifier la position spatiale entre le senseur (1) et l'aimant (2) en fonction de la pression à mesurer, **caractérisé en ce que** le dispositif est disposé à l'intérieur d'un carter (11, 15) d'un composant de système (13) d'une installation ou d'une machine à fonctionnement hydraulique ou pneumatique, et le senseur (1) est implanté à l'extérieur du milieu.

2. Dispositif selon la revendication 1, **caractérisé en ce que** le moyen pour modifier la position spatiale entre le senseur (1) et l'aimant (2) est formé par un piston (3) monté coulissant dans un alésage (4).

3. Dispositif selon une ou plusieurs des revendications précédentes, **caractérisé en ce que** le piston (3) comporte à sa périphérie une garniture d'étanchéité (3A), à l'aide de laquelle deux chambres de l'alésage (4) séparées par le piston (3) sont étanchées l'une par rapport à l'autre.

4. Dispositif selon la revendication 1, **caractérisé en ce que** le moyen pour modifier la position spatiale entre le senseur (1) et l'aimant (2) est formé par une membrane à déformation réversible, communiquant d'un côté avec le milieu.

5. Dispositif selon au moins une des revendications précédentes 1 à 4, **caractérisé en ce qu'**entre le senseur (1) et l'aimant (2) se trouve au moins un moyen de rappel (6) qui s'oppose à la modification de position spatiale due à la pression.

6. Dispositif selon la revendication 5, **caractérisé en ce que** le moyen de rappel est formé par au moins un ressort (6) qui est disposé entre le senseur (1) et le piston (3).

7. Dispositif selon une ou plusieurs des revendications précédentes, **caractérisé en ce que** le dispositif contient un disque (5) et/ou un piston (3) et/ou une membrane qui est constitué de matière antimagnétique.

8. Dispositif selon au moins une des revendications précédentes 1 à 7, **caractérisé en ce que**, pour recevoir le disque (5), l'alésage (4) présente, côté frontal, un diamètre intérieur plus grand que dans la zone où le piston (3) est coulissant, et le diamètre intérieur de la liaison (4B) avec le milieu est constitué par un diamètre inférieur à celui du piston, ce qui crée dans l'alésage (4) un épaulement d'appui (4D) pour le disque (5) et un épaulement d'appui supplémentaire (4E) faisant fonction de butée pour le piston (3).

9. Dispositif selon une ou plusieurs des revendications précédentes, **caractérisé en ce que** le senseur (1) possède une électronique de traitement intégrée avec une mémoire de données programmable, laquelle sert à adapter les valeurs de mesure de senseur aux valeurs de pression associées.

10. Utilisation du dispositif selon une ou plusieurs des revendications précédentes, **caractérisée en ce que** le dispositif est employé comme commutateur à pression avec au moins un point de commutation.

*Fig.1*

*Fig.2*

11

_Fig.3_

_Fig.4_

_Fig.5_

_Fig.6_